Europäisches Patentamt

European Patent Office

Office européen des brevets

(19)

(11) Veröffentlichungsnummer: **0 038 321**
**B1**

(12) **EUROPÄISCHE PATENTSCHRIFT**

(45) Veröffentlichungstag der Patentschrift:
**31.08.83**

(51) Int. Cl.³: **F 03 B 13/10,** F 03 B 17/06

(21) Anmeldenummer: **81890064.9**

(22) Anmeldetag: **14.04.81**

(54) Rohrturbine.

<table>
<tr><td>(30) Priorität: <b>16.04.80 AT 2043/80</b></td><td>(73) Patentinhaber: <b>VOEST-ALPINE Aktiengesellschaft, Werksgelände, A-4010 Linz (AT)</b></td></tr>
<tr><td></td><td>(84) Benannte Vertragsstaaten: <b>CH DE FR IT LI</b></td></tr>
<tr><td>(43) Veröffentlichungstag der Anmeldung:<br><b>21.10.81 Patentblatt 81/42</b></td><td>(73) Patentinhaber: <b>Lindquist, Herman A., 1335 Idylberry Road, San Rafael California 94903 (US)</b></td></tr>
<tr><td>(45) Bekanntmachung des Hinweises auf die Patenterteilung:<br><b>31.08.83 Patentblatt 83/35</b></td><td>(84) Benannte Vertragsstaaten: <b>SE</b></td></tr>
<tr><td>(84) Benannte Vertragsstaaten:<br><b>CH DE FR IT LI SE</b></td><td>(72) Erfinder: <b>Lindquist, Herman A., 1335 Idylberry Road, San Rafael California 94903 (US)</b></td></tr>
<tr><td>(56) Entgegenhaltungen:<br><b>DE-C-912 320<br>FR-A-1 050 248<br>FR-A-1 192 808</b></td><td rowspan="2">(74) Vertreter: <b>Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)</b></td></tr>
<tr><td><b>Mechanical world 1953 London GB «Bifweated Fan Unite» Seite 232, &amp; The Indian and Eastern Engineer, 1952 &amp; Engineering and Boiler House Review, 1953</b></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Rohrturbine

Die Erfindung bezieht sich auf eine Rohrturbine mit einem eine Einlaufkammer und eine Laufradkammer bildenden Strömungskanal, der zwischen der Einlaufkammer und der Laufradkammer in zwei beidseits einer axialen Mittelebene mit Abstand voneinander verlaufende Rohrstränge unterteilt ist, und mit einem durch den Raum zwischen den beiden Rohrsträngen geführten Turbinenabtrieb für einen ausserhalb des Strömungskanales angeordneten Generator.

Bei üblichen Rohrturbinen wird der aus dem Turbinenlaufrad und dem Generator gebildete, gekapselte Mittelteil über radiale Arme im Strömungskanal verankert, wobei zu Montage- und Reparaturarbeiten der Mittelteil begehbar ausgebildet ist. Einer der Radialarme dient bei diesen Konstruktionen als Einstiegsschacht. Eine solche Ausbildung hat sich bei grossen Rohrturbinen gut bewährt, doch wird mit zunehmender Abnahme der Maschinengrösse die Zugänglichkeit zum Mittelteil immer mehr erschwert, so dass sich diese Rohrturbinenkonstruktion für mittlere und kleinere Anlagen nicht eignet.

Bei einer anderen bekannten Konstruktion (DE-PS 912 320) ist nur das Turbinenlaufrad in einem gekapselten Mittelteil gelagert, während der Generator in einem Schacht untergebracht ist, der den Strömungskanal durchsetzt und demnach in zwei Stränge unterteilt. Da der Schacht selbst vergleichsweise viel Raum benötigt, wird die Zugänglichkeit zum Generator durch den Schacht ebenfalls stark beeinträchtigt, wenn eine solche Konstruktion bei mittleren und kleineren Rohrturbinen angewendet werden soll. Ist der Generator ausserhalb des Strömungskanales angeordnet, und über ein Winkelgetriebe mit dem Turbinenlaufrad antriebsverbunden, so wird zwar der Generator einfach zugänglich, nicht aber das im Schacht untergebrachte Winkelgetriebe.

Der Erfindung liegt somit die Aufgabe zugrunde, eine Rohrturbine der eingangs geschilderten Art so auszugestalten, dass sie insbesondere bei der Auslegung für mittlere und kleine Leistungen die gute Zugänglichkeit zu allen wartungsbedürftigen Konstruktionsteilen gewährleistet. Ausserdem soll mit einer solchen Rohrturbine auch das Gefälle von Wasserleitungen od.dgl. zur Energiegewinnung ausgenützt werden können.

Die Erfindung löst die gestellte Aufgabe dadurch, dass die beiden Rohrstränge des Strömungskanales aus einzelnen geraden Rohrschüssen zusammengesetzt sind und einen Querschnitt aufweisen, der dem zugehörigen Teil des durch die Mittelebene geteilten Austrittsquerschnittes der Einlaufkammer entspricht, und dass die Turbinenwelle in einem koaxialen Tragrohr gelagert ist, das die beiden Rohrstränge im Bereich des sich an der Verzweigungsstelle ergebenden Zwickels dicht durchsetzt und in den Raum zwischen den beiden Rohrsträngen ragt.

Da das Betriebswasser in zwei mit Abstand voneinander verlaufenden Rohrsträngen aus einzelnen geraden Rohrschüssen der Laufradkammer zugeführt wird, ergibt sich zwischen den beiden Rohrsträngen ein gut zugänglicher Raum, in dem die Antriebe für die Turbinenregelung untergebracht und der Turbinenabtrieb geführt werden kann.

Die Zugänglichkeit ist trotz der vergleichsweise geringen Abmessungen gegeben, weil nicht ein durch den Strömungskanal geführter Schacht vorhanden ist, sondern das Betriebswasser in zwei durch Rohrschüsse gebildeten Rohrsträngen zum Turbinenlaufrad geleitet wird. Diese beiden Rohrstränge weisen einen Gesamtquerschnitt auf, der dem Austrittsquerschnitt der Einlaufkammer entspricht, so dass sich die Strömungsverhältnisse durch die Aufteilung des Strömungskanales in zwei Rohrstränge nicht wesentlich ändern, zumal die auf Grund der Aufteilung in zwei Rohrstränge notwendigen Umlenkungen der Strömung klein gehalten werden können. Der Raum zwischen den beiden Rohrsträngen braucht ja wegen seiner guten Zugänglichkeit nicht gross zu sein.

Die Herstellung der beiden Rohrstränge ist einfach, weil diese Rohrstränge aus geraden Rohrschüssen zusammengesetzt sind und daher die Mantelerzeugenden von Geraden gebildet werden. Der Anschluss der Rohrstränge an die Einlaufkammer kommt ohne aufwendig gestaltete Zweigstücke aus. Der Querschnitt der Rohrschüsse entspricht nämlich dem Teil des Austrittsquerschnittes der Einlaufkammer, der jeweils vom anderen Rohrstrang freigelassen wird, so dass sich die Querschnitte der beiden Rohrstränge zum Austrittsquerschnitt der Einlaufkammer zusammensetzen. Da im allgemeinen die Einlaufkammer durch einen Rohrstutzen mit Kreisquerschnitt gebildet wird, ergibt sich auch ein kreisförmiger Austrittsquerschnitt, der für die Rohrstränge halbkreisförmige Querschnitte nach sich zieht. Die Rohrschüsse für die beiden Rohrstränge können somit aus Rohren mit Kreisquerschnitt durch entsprechende Axialschnitte hergestellt werden.

Wegen des auch im Bereich der beiden Rohrstränge gleichbleibenden Gesamtquerschnittes sowie der geringen Strömungsumlenkung eignet sich eine solche Konstruktion auch für hohe Einlaufgeschwindigkeiten und hohe Drücke, was dem Einsatz dieser Rohrturbinen auch bei grösseren Fallhöhen möglich macht. Ausserdem ist der Einbau in bestehenden Rohrleitungen einfach, weil lediglich ein Teil dieser Rohrleitungen durch den Strömungskanal der Rohrturbine ersetzt zu werden braucht.

Besonders einfache Verhältnisse werden durch das Tragrohr für die Turbinenwelle sichergestellt, weil das Tragrohr den Strömungsquerschnitt für das Betriebswasser vermindert, so dass das Betriebswasser vor der Laufradkammer in gewünschter Weise beschleunigt wird.

Das Tragrohr wirkt dabei als Versteifung für die einander zugekehrten, ebenen Wände der beiden Rohrstränge im Beschleunigungsbereich für das Betriebswasser und beruhigt stromabwärts die Laufradzuströmung. Trotz des geraden Rohrverlaufs können günstige Strömungsverhältnisse sichergestellt werden, da das Tragrohr nicht im Strömungskanal endet und daher keine Birnen- oder Tropfenform nötig ist. Das den Strömungskanal im Bereich des Zwickels zwischen den beiden Rohrsträngen durchdringende Tragrohr für das Turbinenlaufrad gewährleistet ausserdem eine einfache Antriebsverbindung zwischen dem Generator und dem Laufrad, weil die aus dem Tragrohr in den Raum zwischen den Rohrsträngen ragende Turbinenwelle frei zugänglich ist. In den Raum zwischen den Rohrsträngen kann ein Winkelgetriebe eingesetzt werden, über das die Antriebsverbindung mit dem beispielsweise auf den beiden Rohrsträngen abgestützten Generator hergestellt wird. An Stelle des Winkelgetriebes könnte auch ein Riementrieb die Generatorwelle mit der Turbinenwelle verbinden.

Ist der Durchmesser des Tragrohres entsprechend dem Abstand der beiden Rohrstränge voneinander gewählt, so kann einerseits das Raumangebot besonders vorteilhaft ausgenützt werden und anderseits eine grosse Steifigkeit der Konstruktion erreichbar sein.

Damit die freie Zugänglichkeit zu allen wartungsbedürftigen Konstruktionsteilen gewahrt bleibt, steht das Tragrohrinnere mit dem Strömungskanal in Verbindung, so dass die erforderliche Abdichtung gegenüber dem Betriebswasser an der Austrittsstelle der Turbinenwelle aus dem in den Raum zwischen den Rohrsträngen ragenden Tragrohrende erfolgt, und zwar in üblicher Weise über eine Stopfbuchse, die zufolge dieser Ausbildung vom Raum zwischen den beiden Rohrsträngen zugänglich ist. Die Füllung des Tragrohres mit dem Betriebswasser verhindert, dass über das Tragrohr das Betriebswasser verunreinigt werden kann, was beim Einsatz von Rohrturbinen in Trinkwasserleitungen von wesentlicher Bedeutung ist. Leckwasser kann höchstens über die Stopfbuchse in den Raum zwischen den beiden Rohrsträngen austreten. Dies ist aber problemlos.

Bei einer Verbindung des Strömungskanals mit dem Tragrohrinneren muss sichergestellt sein, dass durch die Lagerung der Turbinenwelle im Tragrohr keine Verunreinigung des Betriebswassers auftreten kann. Wird die Turbinenwelle mittels eines wassergeschmierten Gummilagers im Tragrohr abgestützt, so wird eine Verunreinigung durch Schmieröl ausgeschlossen. Ausserdem wirkt die Wasserfüllung des Tragrohres als Notschmierung, wenn die gesonderte Wasserzufuhr zum Gummilager ausfallen sollte.

In der Zeichnung ist der Erfindungsgegenstand in einem Ausführungsbeispiel vereinfacht dargestellt. Es zeigen

Fig. 1 den Strömungskanal einer erfindungsgemässen Rohrturbine im Schaubild,

Fig. 2 eine Rohrturbine im Längsschnitt,

Fig. 3 einen Schnitt nach der Linie III-III der Fig. 2,

Fig. 4 eine Ausführungsvariante einer erfindungsgemässen Rohrturbine in Seitenansicht,

Fig. 5 einen Schnitt nach der Linie V-V der Fig. 4 und

Fig. 6 eine weitere Ausführungsform einer erfindungsgemässen Rohrturbine im teilweisen Längsschnitt.

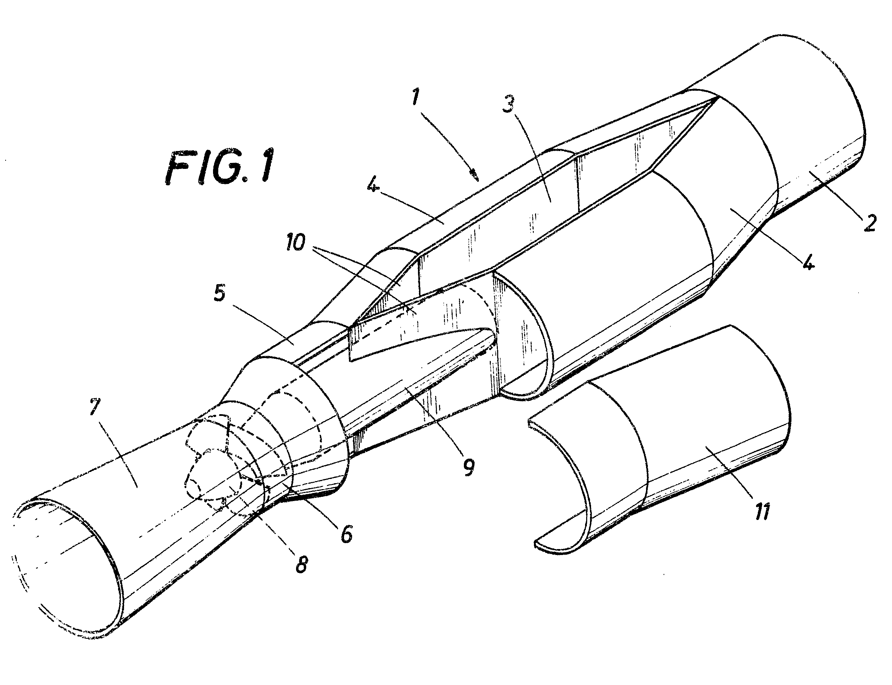

Wie insbesondere der Fig. 1 entnommen werden kann, besteht der Strömungskanal 1 einer erfindungsgemässen Rohrturbine im wesentlichen aus einer Einlaufkammer 2, von der weg sich der Strömungskanal in zwei beidseits einer axialen Mittelebene angeordnete, einen Raum 3 zwischen sich freilassende Rohrstränge 4 aufspaltet, die sich wieder im Bereich eines Laufradkammerzulaufes 5 vereinen, einer Laufradkammer 6 und aus einem an die Laufradkammer 6 anschliessenden Diffusor 7. Der Laufradkammerzulauf 5 weist einlaufseitig einen Kreisquerschnitt auf, der dem Austrittsquerschnitt der als Rohr ausgebildeten Einlaufkammer 2 entspricht. Da die Rohrstränge 4 aus geraden Rohrschüssen zusammengesetzt sind, deren Querschnitte sich zum Austrittsquerschnitt der Einlaufkammer 2 bzw. zum Eintrittsquerschnitt des Laufradkammerzulaufes 5 ergänzen und Halbkreisform besitzen, ergibt sich hinsichtlich des Anschlusses der beiden Rohrstränge 4 an der Austrittsöffnung der Einlaufkammer 2 einerseits und an der Eintrittsöffnung des Laufradkammerzulaufes 5 anderseits keine Schwierigkeit. Die Rohrstränge 4 werden gewissermassen durch eine Teilung der Einlaufkammer erhalten.

Das Turbinenlaufrad 8 wird in einem stromaufwärts liegenden Tragrohr 9 gehalten, das die beiden Rohrstränge 4 im Bereich des sich an der Verzweigungsstelle ergebenden Zwickels dicht durchsetzt und in den Raum 3 zwischen den beiden Rohrsträngen 4 ragt. Um die Durchdringung zwischen dem Tragrohr 9 und den einander zugekehrten ebenen Innenwänden 10 der Strömungskanäle 4 deutlich zu zeigen, ist in Fig. 1 ein Teil 11 der Aussenwand des einen Rohrstranges 4 und des Laufradkammerzulaufes 5 abgehoben dargestellt.

Durch diese Ausbildung des Strömungskanales 1 erhält man einen Raum 3 zwischen den Rohrsträngen 4, der frei zugänglich ist und in dem alle wartungsbedürftigen Konstruktionsteile untergebracht werden können. Die Konstruktion der Antriebsverbindung zwischen dem Laufrad 8 und einem Generator wird dabei kaum beschränkt, weil das Tragrohr 9 mit der Turbinenwelle in diesen freien Raum 3 hineinragt. Trotz der vorteilhaften Möglichkeiten, den Turbinenabtrieb und die Stelltriebe für die Turbine im freien Raum zwischen den beiden Rohrsträngen 4 wartungsfreundlich unterzubringen, ergeben sich günstige Strömungsverhältnisse, die den Einsatz solcher Rohrturbinen auch bei grösseren Eintrittsgeschwindigkeiten und höheren Drücken gestatten. Auf Grund der geringen Strömungsumlenkungen und der gleichbleibenden Strömungsquerschnitte kann mit etwa gleichbleibenden Bedingungen auch im Bereich der beiden Rohrstränge 4 gerechnet werden. Erst im Bereich der Zusammenführung der beiden Rohrstränge 4 vor dem Laufradkammerzulauf 5 ergibt sich durch das Tragrohr 9 eine Verminderung des Strömungsquerschnittes, was eine an sich erwünschte Beschleunigung des Betriebswassers vor der Laufradkammer 6 bedingt.

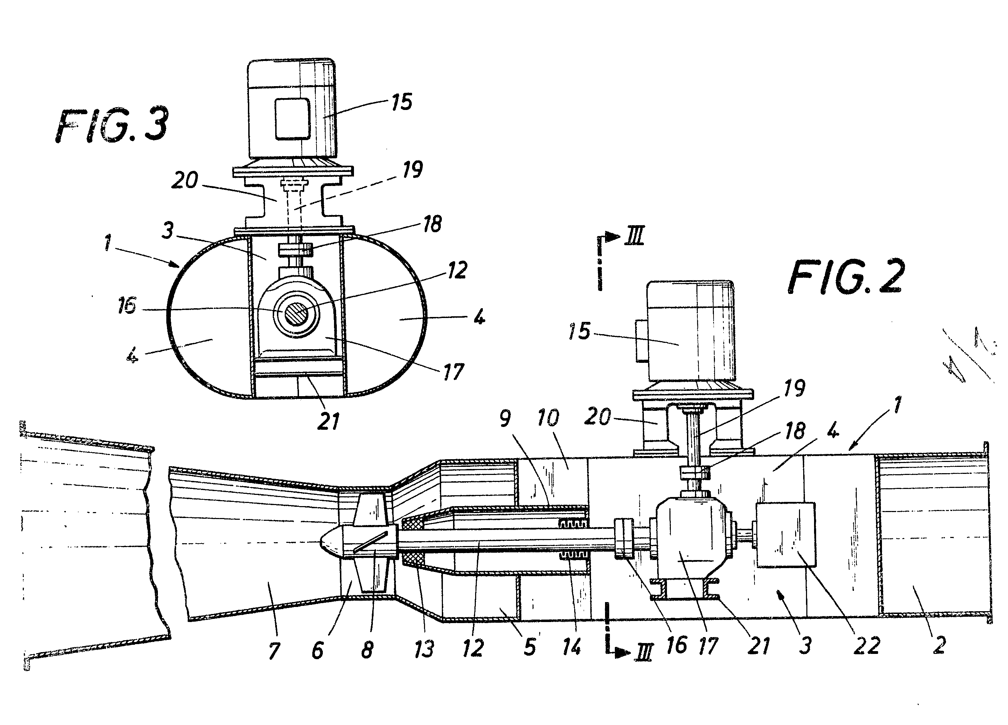

Die das Laufrad 8 tragende Turbinenwelle 12 ist im Tragrohr 9 laufradseitig gemäss Fig. 2 in einem nicht näher dargestellten, wassergeschmierten Gummilager 13 gelagert, wobei die Abdichtung des Tragrohrinneren gegenüber dem Betriebswasser durch eine labyrinthartige Stopfbuchse 14 im Bereich des vom Laufrad 8 abgekehrten Tragrohrendes erfolgt, so dass das Tragrohr 9 mit dem Betriebswasser gefüllt ist. Die Stopfbuchse 14 ist daher vom Raum 3 zwischen den beiden Rohrsträngen 4 her zugänglich, was die Wartung der Stopfbuchse 14 auch während des Betriebes ermöglicht. Zur Antriebsverbindung des Laufrades 8 mit einem Generator 15 ist die Turbinenwelle 12 über eine starre Kupplung 16 an ein Winkelgetriebe 17 angeschlossen, dessen Abtriebswelle über eine elastische Kupplung 18 mit der Generatorwelle 19 verbunden ist. Der Generator 15 wird von einer Konsole 20 getragen, die den freien Raum 3 zwischen den Rohrsträngen 4 überbrückt und auf den Rohrsträngen 4 abgestützt ist. Das Winkelgetriebe 17 kann auf die Rohrstränge 4 verbindenden Trägern 21 gelagert sein, wodurch eine zusätzliche Abstützung der Rohrstränge 4 gegeneinander sichergestellt wird. Zur Turbinenregelung können im Raum 3 zwischen den beiden Rohrsträngen 4 entsprechende Stellmotoren angeordnet werden, wie dies durch den Stelltrieb 22 angedeutet ist.

Wie sich aus Fig. 2 ergibt, wird die Turbinenwelle 12 einerseits durch das wassergeschmierte Gummilager 13 und anderseits über das Winkelgetriebe 17 abgestützt.

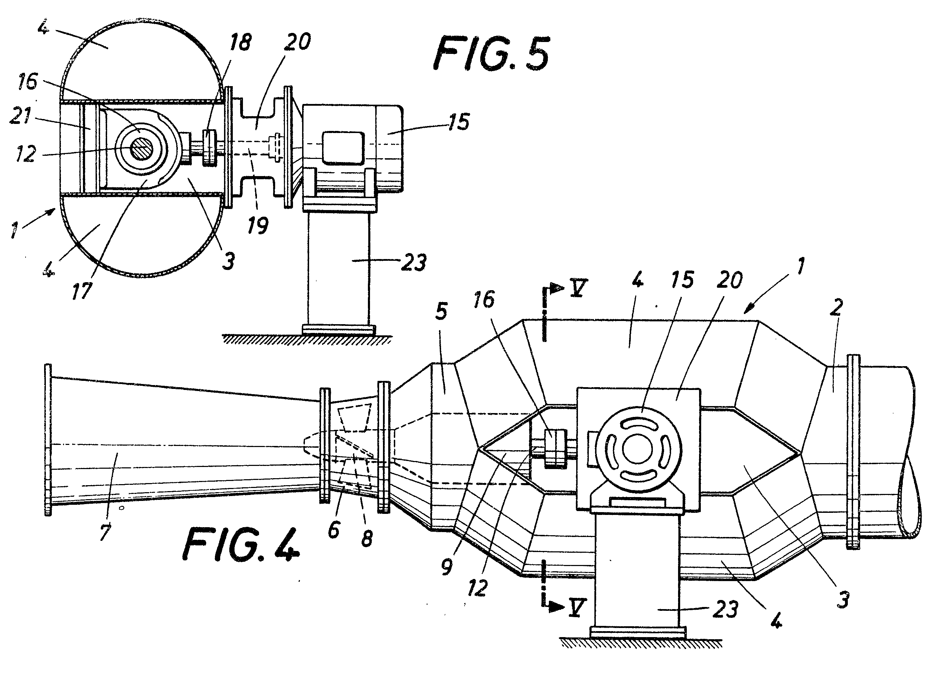

Gemäss den Fig. 2 und 3 verläuft die Mittelebene zwischen den beiden Rohrsträngen 4 in vertikaler Richtung, wobei auch eine vertikale Generatorwelle 19 erhalten wird. Eine solche Lage des Strömungskanals ist jedoch keineswegs zwingend erforderlich, wie dies die Ausbildung nach den Fig. 4 und 5 zeigt. Entsprechend den Fig. 4 u. 5 liegt die Mittelebene zwischen den beiden Rohrsträngen 4, die auch die Generatorwelle 19 enthält, horizontal, wobei eine zusätzliche Abstützung des Generators 15 über ein Fundament 23 möglich ist. Im Falle der Anordnung eines Fundamentes 23 kann auch die Konsole 20 weggelassen werden.

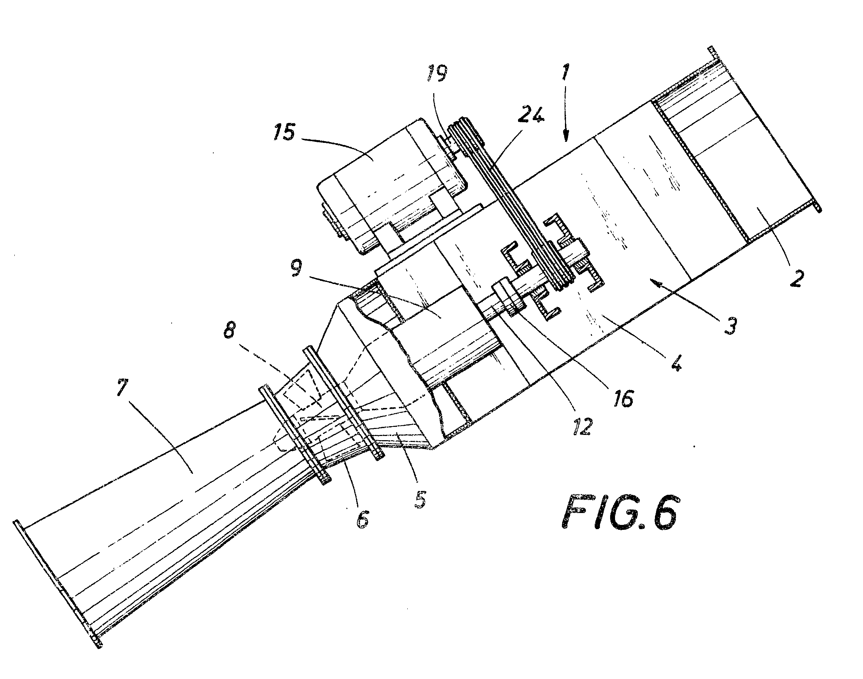

Nach Fig. 6 braucht die Turbinenwelle 12 nicht an ein Winkelgetriebe angeschlossen zu werden. Der Generator, dessen Welle 19 parallel zur Turbinenwelle 12 verläuft, ist mit der Turbinenwelle 12 über einen Riementrieb 24 verbunden. Darüber hinaus zeigt Fig. 6, dass der Strömungskanal 1 auch geneigt verlaufen kann. Im übrigen ist bei der Rohrturbine nach Fig. 6 das gleiche Konstruktionsprinzip verwirklicht, das in der Aufspaltung des Strömungskanals 1 in zwei voneinander getrennte Rohrstränge zu sehen ist, wobei die Rohrstränge wegen der einfachen Herstellungsmöglichkeit jeweils aus geraden Rohrschüssen zusammengesetzt sind. Damit wird zwischen den beiden Rohrsträngen 4 ein frei zugänglicher Raum geschaffen, der die freie Zugänglichkeit zu allen wartungsbedürftigen Konstruktionsteilen sicherstellt, und zwar weitgehend unabhängig von der Turbinengrösse, so dass sich die beschriebene Konstruktion insbesondere für kleine und mittlere Turbinen eignet.

Darüber hinaus ist festzustellen, dass durch die erfindungsgemässe Gestaltung des Strömungskanals für das Betriebswasser die Konstruktion der Turbine nicht beschränkt wird. Es können daher Turbinen mit verstellbaren Laufschaufeln, mit verstellbaren Leitschaufeln oder mit verstellbaren Lauf- und Leitschaufeln Verwendung finden.

## Patentansprüche

1. Rohrturbine mit einem eine Einlaufkammer und eine Laufradkammer bildenden Strömungskanal, der zwischen der Einlaufkammer und der Laufradkammer in zwei beidseits einer axialen Mittelebene mit Abstand voneinander verlaufende Rohrstränge unterteilt ist, und mit einem durch den Raum zwischen den beiden Rohrsträngen geführten Turbinenabtrieb für einen ausserhalb des Strömungskanales angeordneten Generator, dadurch gekennzeichnet, dass die beiden Rohrstränge (4) des Strömungskanales (1) aus einzelnen geraden Rohrschüssen zusammengesetzt sind und einen Querschnitt aufweisen, der dem zugehörigen Teil des durch die Mittelebene geteilten Austrittsquerschnittes der Einlaufkammer (2) entspricht, und dass die Turbinenwelle (12) in einem koaxialen Tragrohr (9) gelagert ist, das die beiden Rohrstränge (4) im Bereich des sich an der Verzweigungsstelle ergebenden Zwickels dicht durchsetzt und in den Raum (3) zwischen den beiden Rohrsträngen (4) ragt.

2. Rohrturbine nach Anspruch 1, dadurch gekennzeichnet, dass der Durchmesser des Tragrohres (9) dem Abstand der beiden Rohrstränge (4) voneinander entspricht.

3. Rohrturbine nach Anspruch 1 oder 2, dadurch gekennzeichnet, dass das Tragrohrinnere mit dem Strömungskanal (1) in Verbindung steht.

4. Rohrturbine nach Anspruch 3, dadurch gekennzeichnet, dass die Turbinenwelle (12) mittels eines wassergeschmierten Gummilagers (13) im Tragrohr (9) gelagert ist.

## Revendications

1. Turbine tubulaire comportant un canal d'écoulement qui forme une chambre d'entrée et une chambre de rotor et qui est subdivisé, entre la chambre d'entrée et la chambre de rotor, en deux tronçons de tube passant avec espacement entre eux de part et d'autre d'un plan médian axial, et un organe mené de turbine guidé entre les deux tronçons de tube pour un générateur disposé à l'extérieur du canal d'écoulement, caractérisé par le fait que les deux tronçons de tube (4) du canal d'écoulement (1) sont composés de différents éléments de tube rectilignes et présentent une section qui correspond à la partie adjointe de la section de sortie de la chambre d'entrée (2), divisée par le plan médian, et que l'arbre (12) de la turbine est monté dans un tube porteur coaxial (9) qui traverse de façon étanche les deux tronçons de tube (4) dans la région du coin formé au point de bifurcation et pénètre dans l'espacement (3) entre les deux tronçons de tube (4).

2. Turbine tubulaire selon la revendication 1, caractérisée par le fait que le diamètre du tube porteur (9) correspond à l'espacement entre les deux tronçons de tube (4).

3. Turbine tubulaire selon la revendication 1 ou 2, caractérisée par le fait que l'intérieur du tube porteur est en communication avec le canal d'écoulement (1).

4. Turbine tubulaire selon la revendication 3, caractérisée par le fait que l'arbre (12) de la turbine est monté dans le tube porteur (9) au moyen d'un coussinet (13) en caoutchouc qui est lubrifié à l'eau.

**Claims**

1. A tubular turbine defining a flow passage which comprises an entrance chamber and a runner chamber and between the inlet chamber and the runner chamber is divided into two pipelines, which are spaced apart on both sides of an axial centre plane, further comprising turbine output drive means extending through the space between the two pipelines and adapted to drive a generator disposed outside the flow passage, characterized in that the two pipelines (4) of the flow passage (1) are composed of individual straight pipe lengths and have a cross-section which corresponds to the corresponding part of the exit cross-section of the entrance chamber (2), which exit cross-section is divided by the centre plane, the turbine shaft (12) is mounted on a coaxial carrying tube (9), which extends tightly through the two pipelines (4) adjacent to the triangular space which is formed by the junction, and said turbine shaft extends into the space (3) between the two pipelines.

2. A tubular turbine according to claim 1, characterized in that the diameter of the carrying tube (9) corresponds to the distance between the two pipelines (4).

3. A tubular turbine according to claim 1 or 2, characterized in that the interior of the carrying tube communicates with the flow passage (1).

4. A tubular turbine according to claim 3, characterized in that the turbine shaft (12) is mounted in the carrying tube (9) by means of a water-lubricated rubber bearing (13).

FIG.1

0 038 321

**FIG.2**

**FIG.3**

2/4

FIG. 5

FIG. 4

4/4

FIG.6